(19) Europäisches Patentamt

European Patent Office

Office européen des brevets

(11) EP 1 571 080 B1

(12) FASCICULE DE BREVET EUROPEEN

(45) Date de publication et mention
de la délivrance du brevet:
**25.10.2006 Bulletin 2006/43**

(51) Int Cl.:
***B64D 27/26*** *(2006.01)*

(21) Numéro de dépôt: **05101605.3**

(22) Date de dépôt: **02.03.2005**

(54) **Système de montage interposé entre un moteur d'aéronef et une structure rigide d'un mât d'accrochage fixé sous une voilure de cet aéronef**

Aufhängevorrichtung eines Flugzeugtriebwerks an einem Flügelpylon

Aircraft engine attachment onto a wing pylon

(84) Etats contractants désignés:
**AT BE BG CH CY CZ DE DK EE ES FI FR GB GR HU IE IS IT LI LT LU MC NL PL PT RO SE SI SK TR**

(30) Priorité: **04.03.2004 FR 0450443**

(43) Date de publication de la demande:
**07.09.2005 Bulletin 2005/36**

(73) Titulaire: **AIRBUS France**
**31060 Toulouse (FR)**

(72) Inventeur: **Marche, Hervé**
**31120, Roquettes (FR)**

(74) Mandataire: **Poulin, Gérard et al**
**BREVALEX**
**3, rue du Docteur Lancereaux**
**75008 Paris (FR)**

(56) Documents cités:
**EP-A- 0 522 688         FR-A- 2 698 848**
**US-A- 4 022 018         US-A- 4 458 863**
**US-A- 5 319 922**

**Description**

**DOMAINE TECHNIQUE**

La présente invention se rapporte de façon générale à un système de montage interposé entre un moteur d'aéronef et une structure rigide d'un mât d'accrochage fixé sous une voilure de cet aéronef.

L'invention se rapporte également à un mât d'accrochage d'un moteur d'aéronef muni d'un tel système de montage, ce système de montage et le mât d'accrochage pouvant par ailleurs être utilisés sur tout type d'aéronef.

**ETAT DE LA TECHNIQUE ANTERIEURE**

Un mât d'accrochage d'un aéronef est prévu pour constituer l'interface de liaison entre un moteur et une voilure de l'aéronef. Il permet de transmettre à la structure de cet aéronef les efforts générés par son moteur associé, et autorise également le cheminement du carburant, de l'électricité, de l'hydraulique et de l'air entre le moteur et l'aéronef.

Afin d'assurer la transmission des efforts, le mât comporte une structure rigide, par exemple du type « caisson », c'est-à-dire formée par l'assemblage de longerons supérieurs et inférieurs raccordés entre-eux par l'intermédiaire de nervures transversales.

D'autre part, le mât est muni d'un système de montage interposé entre le moteur et la structure rigide du mât, ce système comportant globalement au moins deux attaches, généralement une attache avant et une attache arrière.

De plus, le système de montage comprend un dispositif de reprise des efforts de poussée générés par le moteur. Dans l'art antérieur, ce dispositif prend typiquement la forme de deux bielles latérales raccordées d'une part à une partie avant du carter central du moteur, et d'autre part à l'attache arrière.

De la même façon, le mât d'accrochage comporte également un second système de montage interposé entre le mât et la voilure de l'aéronef, ce second système étant habituellement composé de deux ou trois attaches.

Enfin, le mât est pourvu d'une structure secondaire assurant la ségrégation et le maintien des systèmes tout en supportant des carénages aérodynamiques.

De façon connue de l'homme du métier, les efforts de poussée générés par le moteur provoquent habituellement une flexion longitudinale plus ou moins importante de ce dernier, à savoir une flexion résultant d'un couple émanant des efforts de poussée, et exercé selon un axe transversal de l'aéronef. A ce titre, il est également noté que durant les phases de croisière de l'aéronef, les efforts de poussée constituent l'unique cause de flexion longitudinale du moteur.

Lorsqu'une telle flexion longitudinale survient, notamment durant les phases de croisière de l'aéronef, deux cas peuvent se présenter. Dans un premier cas où aucune précaution particulière n'a été prise en ce qui concerne la flexion observée, on rencontre alors inévitablement des frottements élevés d'une part entre les pales tournantes de la soufflante et le carter de soufflante, et d'autre part entre les pales tournantes de compresseur et de turbine et le carter central du moteur. La conséquence principale de ces frottements réside alors dans une usure prématurée du moteur, qui est naturellement néfaste à la durée de vie de celui-ci, ainsi qu'à ses performances. Dans un second cas où l'on a prévu des jeux de fonctionnement adaptés de manière à ce qu'il n'y ait quasiment jamais de contact causé par la flexion longitudinale, le rendement du moteur est alors fortement diminué.

Au vu de ce qui précède, il paraît évident qu'il est nécessaire de prévoir un dispositif de reprise des efforts de poussée qui limite au mieux la flexion longitudinale du moteur due à ces mêmes efforts de poussée, de manière à minimiser autant que possible les frottements contraignants, sans avoir à surdimensionner les jeux de fonctionnement mentionnés ci-dessus.

Or il a été remarqué qu'aucun des dispositifs de reprise des efforts de poussée de l'art antérieur, tels que ceux divulgués dans les documents FR-A 2 698 848 et US-A-5 319 922, ne permettait de limiter de façon totalement satisfaisante la flexion longitudinale du moteur résultant du couple d'axe transversal lié aux efforts de poussée, notamment durant les phases de croisière de l'aéronef.

**EXPOSÉ DE L'INVENTION**

L'invention a donc pour but de proposer un ensemble moteur pour aéronef remédiant au moins partiellement aux inconvénients mentionnés ci-dessus relatifs aux réalisations de l'art antérieur.

Pour ce faire, l'invention a pour objet un ensemble moteur pour aéronef tel que défini dans la revendication 1.

Le système de montage selon l'invention présente un dispositif de reprise des efforts de poussée qui améliore considérablement la reprise de ces efforts par rapport à celle observée dans l'art antérieur avec la solution classique de bielles latérales, puisque ce dispositif peut être facilement conçu pour annuler entièrement le couple d'axe transversal lié à ces mêmes efforts de poussée et appliqué au moteur, en dimensionnant de façon appropriée les deux vérins latéraux ainsi que le dispositif à piston hydraulique. En effet, comme cela sera exposé de façon détaillée ci-dessous, les deux vérins latéraux et le dispositif à piston hydraulique remplissent alors grossièrement une fonction de système à palonnier vertical dont les efforts transmis au moteur permettent d'annuler intégralement le couple d'axe transversal durant les phases de croisière, quelle que soit les efforts de poussée rencontrés.

Par conséquent, durant les phases de croisière de l'aéronef, la présence d'un tel dispositif de reprise implique que le moteur ne subit aucune flexion longitudinale. De cette façon, aucune usure prématurée n'est rencontrée au niveau des éléments constitutifs du moteur, et la durée de vie ainsi que les performances de ce dernier ne sont donc plus affaiblies.

De plus, il est indiqué que de façon avantageuse, le système de montage est un système isostatique, ce qui facilite grandement sa conception.

De préférence, le compartiment arrière de la chambre du dispositif à piston hydraulique est connecté hydrauliquement aux compartiments avant des vérins latéraux.

De façon avantageuse, la connexion susmentionnée permet également d'annuler le couple d'axe transversal et la flexion longitudinale du moteur lorsque celui-ci fonctionne en mode inversion de poussée (de l'anglais « reverse »).

Préférentiellement, les compartiments avant des deux vérins latéraux sont connectés hydrauliquement, et les compartiments arrière de ces deux mêmes vérins sont également connectés hydrauliquement. Par conséquent, les connexions effectuées assurent que durant les phases de croisière, les efforts transitant par chacune des deux tiges des vérins latéraux sont sensiblement égaux, sans que l'on ait besoin d'adjoindre un palonnier raccordant les deux tiges à l'attache avant ou arrière, comme cela était pourtant nécessaire dans l'art antérieur. Ainsi, l'effet de palonnier horizontal obtenu à l'aide des vérins latéraux permet avantageusement au dispositif de reprise des efforts de poussée de présenter un encombrement global affaibli par rapport à celui rencontré antérieurement.

De préférence, les chambres des vérins latéraux et du dispositif à piston hydraulique sont pratiquées à l'intérieur de la partie avant du carter central du moteur, ce qui réduit encore davantage l'encombrement du système de montage.

De manière préférée, l'extrémité arrière de chacune des deux tiges est connectée à l'attache avant. Néanmoins, elle pourrait bien entendu être connectée à l'attache arrière, sans sortir du cadre de l'invention.

Le système comporte de préférence une attache avant solidaire de la partie avant du carter central du moteur, et comporte également une attache arrière solidaire d'une partie arrière de ce carter central, et de la structure rigide du mât.

On peut alors prévoir que l'attache avant comporte une rotule montée sur un axe orienté selon une direction longitudinale de l'aéronef, et que le piston du dispositif à piston hydraulique est solidaire de cet axe, et agencé sensiblement perpendiculairement à cette direction longitudinale.

Selon un premier mode de réalisation préféré de la présente invention, le compartiment avant de la chambre du dispositif à piston hydraulique est connecté hydrauliquement uniquement aux compartiments arrière des vérins latéraux.

Selon un second mode de réalisation préféré de la présente invention, le compartiment avant du dispositif à piston hydraulique est également connecté hydrauliquement à une alimentation hydraulique haute pression et dispose d'au moins un orifice de fuite dont l'accès est apte à être autorisé/interdit par un organe solidaire du piston, en fonction de la pression hydraulique régnant à l'intérieur du compartiment avant, ainsi qu'en fonction des efforts de poussée générés par le moteur.

De la même manière, le compartiment arrière du dispositif à piston hydraulique peut également être connecté hydrauliquement à une alimentation hydraulique haute pression et disposer d'au moins un orifice de fuite dont l'accès est apte à être autorisé/interdit par un organe solidaire du piston, en fonction de la pression hydraulique régnant à l'intérieur du compartiment arrière, ainsi qu'en fonction des efforts de contre-poussée générés par le moteur. Ainsi, avec un tel agencement, le fonctionnement du dispositif de reprise des efforts de poussée est également assuré lorsque le moteur est en mode inversion de poussée.

D'autres avantages et caractéristiques de l'invention apparaîtront dans la description détaillée non limitative ci-dessous.

## BRÈVE DESCRIPTION DES DESSINS

Cette description sera faite au regard des dessins annexés parmi lesquels ;

- la figure 1 représente une vue en perspective d'un système de montage interposé entre un moteur d'aéronef et une structure rigide d'un mât d'accrochage fixé sous une voilure de cet aéronef, selon un premier mode de réalisation préféré de la présente invention ;
- la figure 2 représente une vue partielle de côté de la figure 1 ;
- la figure 3 représente une vue en coupe prise le long de la ligne III-III de la figure 2 ;
- la figure 4 représente un diagramme de force montrant l'ensemble des efforts s'exerçant sur le moteur auquel est associé le dispositif de reprise des efforts de poussée de la figure 1, lorsque l'aéronef est dans une phase de croisière ; et
- la figure 5 représente une vue similaire à celle de la figure 2, lorsque le système de montage interposé entre un moteur d'aéronef et une structure rigide d'un mât d'accrochage fixé sous une voilure de cet aéronef est réalisé selon un second mode de réalisation préféré de la présente invention.

**EXPOSÉ DÉTAILLÉ DE MODES DE RÉALISATION PRÉFÉRÉS**

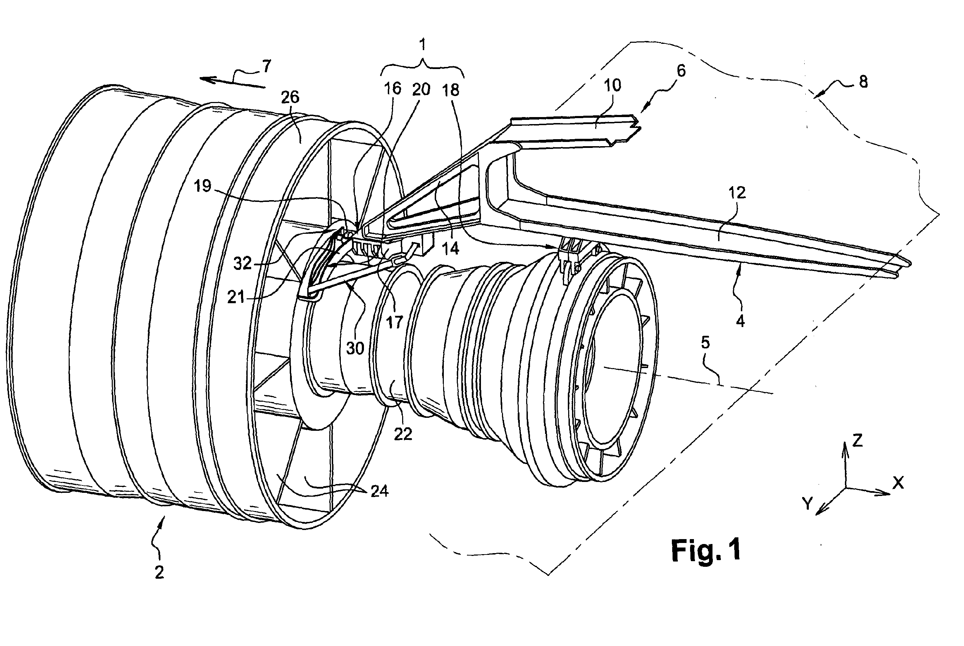

En référence à la figure 1, on voit un système de montage 1 selon un premier mode de réalisation préféré de la présente invention, ce système de montage 1 étant interposé entre un moteur 2 d'aéronef et une structure rigide 4 d'un mât d'accrochage 6 fixé sous une aile d'aéronef représentée uniquement schématiquement pour des raisons évidentes de clarté, et désignée de façon générale par la référence numérique 8. Il est noté que le système de montage 1 représenté sur cette figure 1 est adapté pour coopérer avec un turboréacteur 2, mais il pourrait bien entendu s'agir d'un système conçu pour suspendre tout autre type de moteur, tel qu'un turbopropulseur, sans sortir du cadre de l'invention.

Dans toute la description qui va suivre, par convention, on appelle X la direction parallèle à un axe longitudinal 5 du moteur 2, Y la direction orientée transversalement par rapport à l'aéronef, et Z la direction verticale, ces trois directions étant orthogonales entre-elles.

D'autre part, les termes « avant » et « arrière » sont à considérer par rapport à une direction d'avancement de l'aéronef rencontrée suite à la poussée exercée par les moteurs 2, cette direction étant représentée schématiquement par la flèche 7.

Sur la figure 1, on peut voir que seule une portion de la structure rigide 4 du mât d'accrochage 6 a été représentée, accompagnée évidemment du système de montage 1 faisant partie intégrante de ce mât 6, ce dernier étant également objet de la présente invention.

Les autres éléments constitutifs non-représentés de ce mât 6, tels que les moyens d'accrochage de la structure rigide 4 sous la voilure 8 de l'aéronef, ou encore la structure secondaire assurant la ségrégation et le maintien des systèmes tout en supportant des carénages aérodynamiques, sont des éléments classiques identiques ou similaires à ceux rencontrés dans l'art antérieur, et connus de l'homme du métier. Par conséquent, il n'en sera fait aucune description détaillée.

De façon connue, il est indiqué que la structure rigide 4 est globalement réalisée par l'assemblage de longerons inférieurs 12 et supérieurs 10 raccordés entre-eux par une pluralité de nervures transversales (non représentées). De plus, une partie avant de cette structure rigide 4 est constituée par une pyramide 14, également connue de l'homme du métier et prenant donc la forme d'une structure partant d'une base et s'étendant vers un sommet en allant vers l'avant et en se rapprochant de l'axe longitudinal 5 du moteur 2.

Sur la figure 1, on peut apercevoir que le système de montage 1 comporte tout d'abord une attache avant 16, une attache arrière 18, ainsi qu'un dispositif 20 de reprise des efforts de poussée générés par le moteur 2. A ce titre, il est précisé que les deux attaches 16 et 18 précitées sont du type classiques et connus de l'homme du métier. Par conséquent, ils seront uniquement décrits succinctement, à titre indicatif et non limitatif.

En ce qui concerne l'attache avant 16, celle-ci est d'une part solidaire d'une extrémité avant de la pyramide 14 de la structure rigide 4, c'est-à-dire son sommet, et d'autre part solidaire d'une partie avant d'un carter central 22 du moteur 2. Plus précisément, l'attache avant 16 pénètre dans une portion radiale supérieure 21 du carter central 22 située à proximité et à l'arrière de pales fixes 24, celles-ci reliant un carter de soufflante 26 du moteur 2 à ce même carter central 22.

Cette attache avant 16 comprend généralement une rotule 19, également appelée « monoball », qui pénètre à l'intérieur du carter central 22 de manière à pourvoir assurer la reprise des efforts selon la direction verticale Z ainsi que selon la direction transversale Y. Par ailleurs, l'attache avant 16 comporte un corps 17.

En outre, on peut apercevoir sur la figure 1 que la portion radiale supérieure 21, située au niveau de la partie avant du carter central 22 et représentée de façon coupée pour des raisons de clarté, fait saillie radialement vers l'extérieur par rapport à une partie plus arrière du carter 22, et s'étend par exemple sur un secteur angulaire d'environ 90°.

D'autre part, l'attache arrière 18 est d'une part solidaire d'une partie arrière du carter central 22, et d'autre part solidaire d'un longeron inférieur 12 de la structure rigide 4 du mât 6. L'attache arrière classique 18 représentée sur la figure 1 est globalement constituée de manilles et de ferrures, et assure la reprise des efforts selon les directions Y et Z, ainsi que la reprise du moment s'exerçant selon la direction X.

La particularité de l'invention réside dans le fait que le système de montage 1 comporte un dispositif 20 de reprise des efforts de poussée conçu pour annuler totalement la flexion longitudinale du moteur 2 résultant d'un couple d'axe transversal lié à ces efforts de poussée. Ainsi, durant les phases de croisière de l'aéronef où la flexion longitudinale du moteur 2 est normalement exclusivement due aux efforts de poussée, aucune déformation longitudinale de ce moteur 2 n'est ainsi rencontrée.

Tout d'abord, il est précisé qu'un plan vertical XZ passant par l'axe longitudinal 5 du moteur 2 constitue un plan de symétrie pour le dispositif de reprise 20.

Comme on peut l'apercevoir sur la figure 1, ce dispositif 20 comprend principalement deux vérins latéraux 30 (un seul d'entre-eux étant visible) disposés de part et d'autre du carter central 22, ainsi qu'un dispositif à piston hydraulique 32 situé globalement dans le prolongement avant de l'attache avant 16, au droit de la rotule 19.

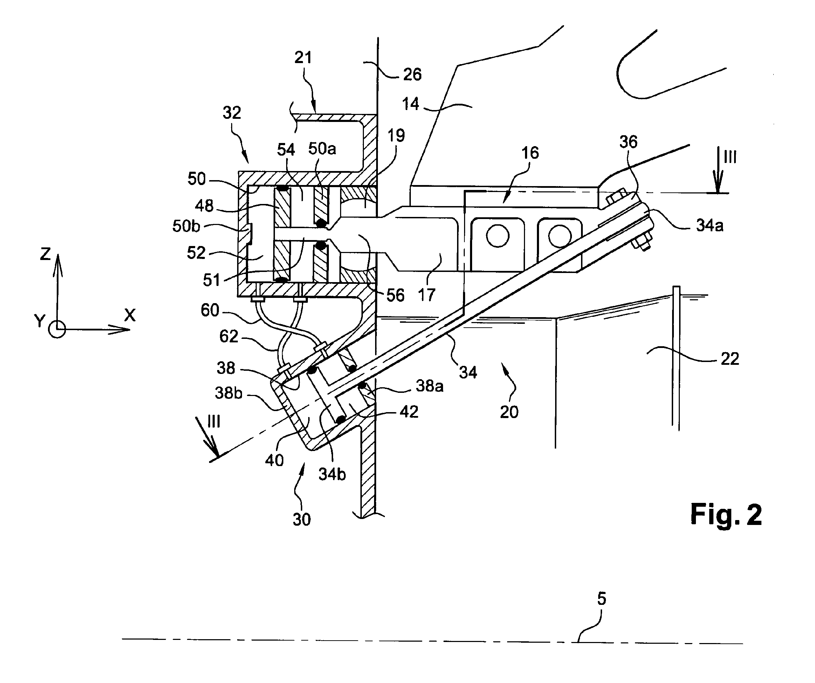

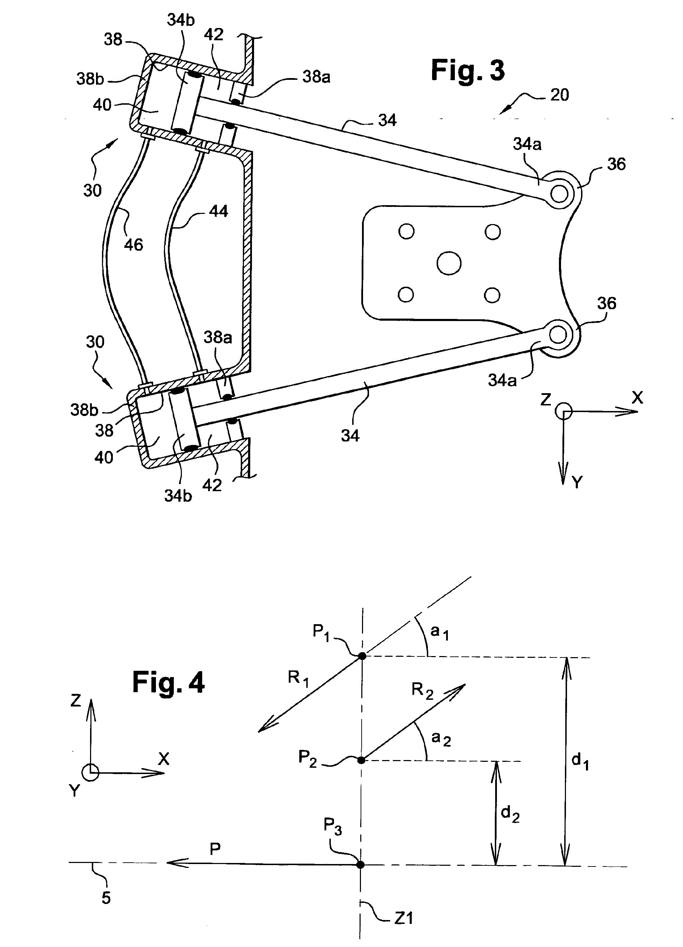

En référence à présent plus spécifiquement aux figures 2 et 3, on voit que chacun des vérins latéraux 30, qui sont de préférence identiques et donc disposés symétriquement par rapport au plan XZ passant par l'axe 5, présente une tige 34 se rapprochant de ce même plan XZ en allant vers le haut et vers l'arrière. Une extrémité arrière 34a de la tige 34 est montée sur un oreille à double tête 36 située au niveau d'une extrémité arrière du corps 17 de l'attache avant 16. Ainsi, l'extrémité arrière 34a peut être montée de façon articulée entre les deux têtes de l'oreille 36, par exemple à l'aide d'une rotule ou d'un axe (non référencé).

La tige 34 présente également une extrémité avant 34b prenant la forme d'un piston situé à l'intérieur d'une chambre 38 dans laquelle ce piston 34b est susceptible de se déplacer, la chambre 38 étant de préférence réalisée directement à l'intérieur de la portion supérieure 21 de la partie avant du carter central 22. Cette chambre 38 comporte alors un compartiment avant 40 et un compartiment arrière 42 séparés par le piston 34b, et dans lesquels se trouve un fluide tel que de l'huile. Au même titre que le piston 34b, la chambre 38 est alors de préférence cylindrique de section circulaire, et présente une paroi arrière cylindrique 38a traversée perpendiculairement et de façon étanche par la tige 34, ainsi qu'une paroi avant cylindrique 38b parallèle à la paroi 38a et au piston 34b.

En référence plus particulièrement à la figure 3, on voit que les compartiments arrière 42 sont connectés hydrauliquement, par exemple à l'aide d'une tuyauterie souple 44. Par conséquent, lorsque le moteur 2 exerce des efforts de poussée, la connexion hydraulique opérée implique que l'huile voit sa pression augmenter de manière identique dans les deux compartiments arrière 42, de sorte que les efforts repris respectivement par les deux tiges 34 et transmis à l'attache avant 16 sont aussi sensiblement égaux.

De la même façon, les compartiments avant 40 sont aussi connectés hydrauliquement, toujours à l'aide d'une tuyauterie souple 46. Ainsi, l'effet de palonnier horizontal procuré par les vérins latéraux 30 peut également être assuré lorsque le moteur 2 fonctionne en mode inversion de poussée.

A nouveau en référence à la figure 2, on peut voir que le dispositif à piston hydraulique 32 comporte un piston 48 situé à l'intérieur d'une chambre 50 dans laquelle ce piston 48 est susceptible de se déplacer, la chambre 50 étant de préférence réalisée directement à l'intérieur de la portion supérieure 21 de la partie avant du carter central 22. Cette chambre 50 comporte alors un compartiment avant 52 et un compartiment arrière 54 séparés par le piston 48, et dans lesquels se trouve un fluide identique à celui prévu dans les chambres 38. Au même titre que le piston 48, la chambre 50 est alors de préférence cylindrique de section circulaire, et présente une paroi arrière cylindrique 50a traversée perpendiculairement et de façon étanche par une tige de piston 51, ainsi qu'une paroi avant cylindrique 50b parallèle à la paroi 50a et au piston 48.

Par ailleurs, en se référant à la direction verticale Z et en considérant le dispositif de reprise 20 en vue de côté, il est noté que le piston 48 du dispositif 32 se situe au-dessus des pistons 34b des vérins 30. Ainsi, toujours en se référant à la même vue, les efforts exercés par la pression du fluide situé dans la chambre 50 sont situés au-dessus des efforts exercés par la pression du fluide situé dans les chambres 38.

On peut voir que dans ce premier mode de réalisation préféré de la présente invention, la rotule 19 de l'attache avant 16 est montée sur un axe 56 orienté selon la direction X, cet axe 56 étant lui-même solidaire du corps 17 de l'attache 16. A cet égard, le piston 48 est monté solidairement sur l'axe 56 par l'intermédiaire de la tige de piston 51 agencée dans le prolongement de ce dernier, et est situé à l'avant de cet axe 56, sensiblement perpendiculairement à la direction X.

En d'autres termes, le piston 48 est de préférence susceptible d'être déplacé selon la direction X à l'intérieur de la chambre 50, contrairement aux pistons 34b des vérins 30 qui sont respectivement susceptibles de se déplacer selon les directions des tiges 34 associées, à savoir selon des directions se rapprochant du plan XZ passant par l'axe 5 en allant vers l'arrière et vers le haut.

Comme cela sera explicité de façon détaillée ci-dessous, pour annuler le couple d'axe transversal appliqué au moteur 2 et lié aux efforts de poussée, le compartiment avant 52 de la chambre 50 est connecté hydrauliquement aux deux compartiments arrière 42 de la chambre 38, de préférence à l'aide de tuyauteries souples 60. De cette façon, à chaque instant, la pression du fluide régnant à l'intérieur du compartiment avant 52 est sensiblement identique à la pression du fluide régnant à l'intérieur des compartiments arrière 42.

De plus, il est précisé que pour obtenir le même effet d'annulation du couple d'axe transversal lorsque le moteur 2 fonctionne en mode inversion de poussée, il est prévu des tuyauteries souples 63 connectant hydrauliquement le compartiment arrière 54 de la chambre 50 et les deux compartiments avant 40 des chambres 38.

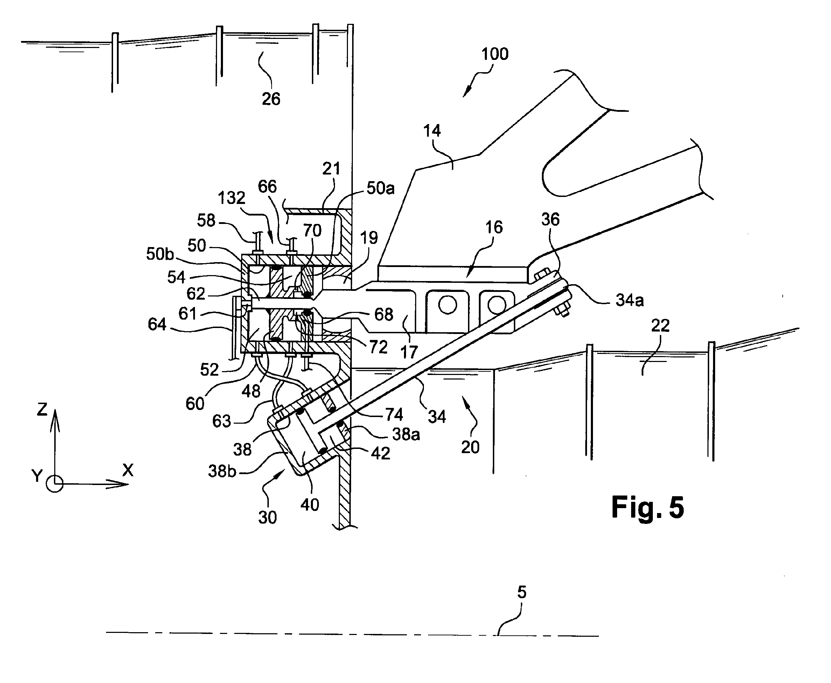

En référence à la figure 4, on peut effectivement voir un diagramme de force montrant qu'il est possible d'annuler le couple d'axe transversal s'appliquant sur le moteur 2 durant les phases de croisière, en dimensionnant judicieusement les vérins 30 et le dispositif à piston hydraulique 32.

Sur ce diagramme comportant la projection des divers efforts sur le plan vertical XZ passant par l'axe 5, on peut tout d'abord noter la présence des efforts de poussée symbolisés par la flèche P, ces efforts étant orientés vers l'avant selon la direction X.

Par ailleurs, la flèche R1 symbolise les efforts de pression exercés par le fluide contenu dans la chambre 50 du dispositif 32, et la flèche R2 symbolise la somme des efforts de pression exercés par le fluide contenu dans les deux chambres 38 des vérins latéraux 30.

Ces efforts R1 et R2 sont orientés respectivement vers l'arrière et vers l'avant, selon des angles a1 et a2 par rapport à la direction X. Il est noté que le sens opposé des efforts R1 et R2 est tout simplement obtenu à l'aide de la connexion hydraulique décrite précédemment, à savoir la connexion entre d'une part le compartiment avant 52 de la chambre 50, et d'autre part les compartiments arrière 42 des deux chambres 38.

A titre indicatif, il est précisé que l'angle a1 est nul dans le cas du premier mode de réalisation préféré représenté sur les figures 1 à 3. De plus, les points d'application P1 et P2 des efforts R1 et R2 sont situés respectivement à des distances d1 et d2 de l'axe 5 sur une ligne verticale Z1 passant également par un point P3 correspondant au point d'application des efforts de poussée. Naturellement, il est à comprendre que le positionnement vertical des points P1 et P2 par rapport au point P3 ainsi que la valeur des angles a1 et a2 sont fonctions de la géométrie globale du dispositif de reprise 20.

Par conséquent, pour que le couple d'axe transversal appliqué au moteur 2 soit annulé, il suffit que les valeurs des trois efforts impliqués P, R1 et R2 vérifient le système d'équations suivant, dont l'équation (a) correspond à la somme des moments appliqués au point P3 et dont l'équation (b) correspond à la somme des moments appliqués au point P1 :

$$\text{(a)} \quad R1.\cos(a1).d1 - R2.\cos(a2).d2 = 0$$

$$\text{(b)} \quad R2.\cos(a2).(d1-d2) = P.d1$$

De ce système d'équations, il ressort donc clairement que le rapport entre R1 et R2 est constant, indépendant de P, et uniquement lié à la géométrie globale du dispositif de reprise 20.

En effet, le rapport susmentionné vérifie l'équation (c) suivante :

$$\text{(c)} \quad R2/R1 = (\cos(a1).d1)/(\cos(a2).d2)$$

De cette façon et comme indiqué ci-dessus, il suffit simplement de dimensionner les vérins 30 et le dispositif 32 de sorte qu'un rapport k correspondant à R1/R2 vérifie l'équation (c), pour que le couple d'axe transversal s'appliquant sur le moteur 2 soit annulé, et ce quelle que soit la valeur des efforts de poussée durant les phases de croisière.

A ce titre, si $\Phi1$ est le diamètre du piston 48 et $\Phi2$ le diamètre de chacun des deux pistons 34b, alors les valeurs de ces diamètres seront choisies de manière à ce qu'elles vérifient l'équation (d) suivante :

$$\text{(d)} \quad \Phi2 = \Phi1.\sqrt{(k/2)}$$

Bien entendu, il est noté que lorsque les diamètres $\Phi2$ et $\Phi1$ vérifient l'équation (d), ils permettent également d'obtenir une annulation du couple d'axe transversal lorsque le moteur fonctionne dans le mode inversion de poussée, notamment grâce aux tuyauteries souples 63 connectant hydrauliquement d'une part le compartiment arrière 54 de la chambre 50, et d'autre part les compartiments avant 40 des deux chambres 38.

Dans ce premier mode de réalisation préféré, le compartiment avant 52 de la chambre 50 est connecté hydrauliquement uniquement aux compartiments arrière 42 des vérins 30, de même que chacun des deux compartiments arrière 42 de la chambre 38 est connecté hydrauliquement uniquement au compartiment avant 52 de la chambre 50. En d'autres termes, le compartiment avant 52, les compartiments arrière 42 et les tuyauteries souples 60 constituent un ensemble fermé à l'intérieur duquel le fluide peut circuler librement. De plus, excepté lors des opérations de remplissage et de vidange des éléments 52, 42 et 60, aucun fluide extérieur ne peut pénétrer dans cet ensemble, et le fluide contenu dans celui-ci ne peut s'en échapper.

Il est par ailleurs noté que les propriétés relatives à l'ensemble 52,42,60 qui vient d'être décrit sont de préférence également valables pour l'ensemble constitué du compartiment arrière 54, des compartiments avant 40 et des tuyauteries souples 63.

Ainsi, lorsque l'aéronef se trouve dans une phase de croisière et que le moteur 2 exerce des efforts de poussée P, le fluide contenu à l'intérieur des deux compartiments arrière 42 voit sa pression augmenter jusqu'à ce qu'il atteigne une valeur « Vp » nécessaire pour contrer ces efforts P, cette valeur étant la même dans les deux compartiments 42 en raison de la connexion hydraulique opérée. L'augmentation de la pression est due à la compression du fluide, ce qui engendre des efforts R2 sur la paroi arrière 52a des chambres 52.

Simultanément, le fluide situé à l'intérieur du compartiment avant 52 atteint la même pression « Vp » que celle du fluide situé à l'intérieur des compartiments arrière 42, toujours en raison des connexions hydrauliques réalisées. De cette façon, le fluide présent dans le compartiment avant 52 permet de générer les efforts R1 sur la paroi avant 50b de la chambre 50. Et, comme indiqué précédemment, la géométrie et le dimensionnement du dispositif de reprise 20 impliquent que ces efforts R1 résultant de la pression « Vp » sont tels qu'ils permettent de contrer les efforts de poussé P, et tels qu'ils assurent également l'annulation du couple d'axe transversal conjointement à l'aide des efforts R2.

Enfin, on peut noter que dans ce premier mode de réalisation préféré de la présente invention, la mesure de la différence de pression du fluide entre les compartiments avant et arrière de l'une des chambres 38,50 permettrait de déterminer les efforts de pression exercés par le moteur 2, en raison de la relation de proportionnalité existant entre ces données.

En référence à la figure 5, on voit un système de montage 100 selon un second mode de réalisation préféré de la présente invention, ce système de montage 100 étant similaire au système de montage 1 du premier mode de réalisation préféré décrit ci-dessus.

A cet égard, il est indiqué que sur les figures 1 à 5, les éléments portant les mêmes références numériques correspondent à des éléments identiques ou similaires.

Ainsi, on peut s'apercevoir que dans ce second mode de réalisation préféré de la présente invention, seul le dispositif à piston hydraulique 132 diffère par rapport au dispositif 32 du premier mode de réalisation préféré.

En effet, le dispositif 132 reprend tous les éléments du dispositif 32, et incorpore de plus d'autres éléments supplémentaires qui vont à présent être décrits.

Le compartiment avant 52 est connecté hydrauliquement aux compartiments arrière 42, mais également à une alimentation hydraulique haute pression 58. Cette alimentation 58 alimente de façon continue le compartiment avant 52 en fluide, à une pression supérieure à la pression permettant de contrer les efforts de poussée maximum que peut générer le moteur 2.

D'autre part, le compartiment avant 52 dispose d'un orifice de fuite 61, par exemple situé sur la paroi avant 50b de la chambre 50, et dont l'accès est apte à être autorisé/interdit par un organe 62 solidaire du piston 48. Cet organe 62, situé en regard de l'orifice de fuite 61, est effectivement susceptible de libérer ou d'obturer cet orifice 61 respectivement en rompant le contact avec la paroi avant 50b et en entrant en contact avec cette même paroi, et ce en fonction de la position du piston 48 dans la chambre 50. En d'autres termes, l'accès à l'orifice de fuite 61 est interdit/autorisé par l'organe 62 en fonction de la pression hydraulique régnant à l'intérieur du compartiment avant 52, ainsi qu'en fonction des efforts de poussée générés par le moteur 2. De préférence et comme cela est visible sur la figure 5, l'organe 62 peut prendre la forme d'un axe centré par rapport au piston 48 et situé à l'avant de celui-ci.

Ainsi, en fonctionnement, la forte pression du fluide fourni par l'alimentation 58 implique que le piston 48 se déplace vers l'arrière en emmenant avec lui l'organe 62, ce qui entraîne alors la libération de l'orifice de fuite 61. Une partie du fluide sort donc du compartiment 52 par cet orifice 61, puis se dirige vers un circuit de fuite 64 qui est de préférence connecté hydrauliquement à l'alimentation haute pression 58. Par conséquent, la libération de l'orifice de fuite 61 engendre simultanément une diminution de la pression du fluide à l'intérieur du compartiment 52 qui devient très faible, ce qui entraîne un retour du piston 48 vers l'avant. De plus, ce déplacement vers l'avant du piston 48 est stoppé par l'entrée en contact de l'organe 62 avec la paroi avant 50b qui provoque une nouvelle obturation de l'orifice de fuite 61. Ensuite, en raison de la présence de l'alimentation haute pression 58 et de l'obturation de l'orifice 61, la pression à l'intérieur du compartiment 52 augmente, et le piston 48 est alors à nouveau déplacé vers l'arrière lorsque cette pression dépasse la pression nécessaire à contrer les efforts de poussée instantanés générés par le moteur 2.

De cette manière, le mouvement de va-et-vient permanent décrit par le piston 48 permet d'avoir une pression de fluide à l'intérieur du compartiment 52 qui soit à chaque instant la pression juste nécessaire pour contrer les efforts de poussée s'exerçant à ce même instant. La mesure de cette pression autoriserait donc la détermination des efforts de poussée instantanés, toujours en raison de la relation de proportionnalité existant entre ces données.

Il est précisé que la fonctionnalité qui vient d'être décrite peut également être prévue pour le mode inversion de poussée.

Pour ce faire, de façon analogue à celle présentée ci-dessus, le compartiment arrière 54 est alors connecté hydrauliquement à une alimentation hydraulique haute pression 66. Cette alimentation 66 alimente de façon continue le compartiment arrière 54 en fluide, à une pression supérieure à la pression permettant s'opposer aux efforts de contre-poussée maximum que peut générer le moteur 2.

D'autre part, le compartiment 54 dispose d'un orifice de fuite 68, par exemple situé sur la paroi arrière 50a de la chambre 50, et dont l'accès est apte à être autorisé/interdit par un organe 70 solidaire du piston 48. Comme cela est visible sur la figure 5, cet organe 70 peut prendre la forme d'une couronne d'axe parallèle à la direction X, qui lorsqu'elle est en contact avec la paroi 50a, définit une enceinte fermée 72 inaccessible au fluide se trouvant dans le compartiment arrière 54, cette enceinte 72 communiquant par ailleurs avec l'orifice de fuite 68. En revanche, lorsque le piston 48 se déplace vers l'avant, le contact entre l'organe 70 et la paroi arrière 50a est rompu, de sorte que le fluide peut alors pénétrer dans l'enceinte 72 et s'échapper par l'orifice de fuite 68 en direction d'un circuit de fuite 74, qui est aussi de préférence connecté hydrauliquement à l'alimentation haute pression 66, indépendante de l'alimentation haute pression 58. De préférence et comme cela est visible sur la figure 5, l'organe 70 est bien entendu situé à l'arrière du piston 48.

Il est noté que les alimentations haute pression 58 et 66 peuvent chacune fonctionner à l'aide d'une pompe à engrenage montée sur une boîte d'accessoires du moteur 2, ce type de pompe étant préféré en ce sens qu'il peut assurer de très forte pression sous faible débit.

Par ailleurs, il est noté que les organes 62 et 70 peuvent avantageusement remplir la fonction de butées mécaniques en cas de fuite hydraulique, respectivement en coopération avec les paroi 50b et 50a de la chambre 50.

D'autre part, même si cela n'apparaît par sur la figure 5, les organes 62 et 70 ne sont en évidence pas simultanément en contact respectivement avec les parois 50b et 50a. En effet, il est prévu un jeu adapté de sorte que lorsque l'un des organes 62,70 est en contact avec sa paroi associée 50b, 50a, l'autre organe est situé à distance de sa paroi associée. Par conséquent, lorsque l'accès à l'un des orifices 61,68 est interdit, l'accès à l'autre orifice est autorisé. A ce titre, il est indiqué que le jeu prévu est suffisamment petit pour que lors du montage, les organes 62 et 70 assurent un bon positionnement du moteur 2 par rapport au mât 6, dans la direction longitudinale X.

De plus, ce jeu est tel que durant le mouvement de va-et-vient décrit par le piston 48 lors d'un fonctionnement du moteur 2 en mode normal de poussée, l'accès à l'orifice 68 est toujours autorisé, de sorte que la pression du fluide régnant à l'intérieur du compartiment 54 reste toujours très faible, voire nulle. Bien évidemment, cette constatation est également valable pour l'accès à l'orifice 61 lorsque le moteur 2 fonctionne en mode inversion de poussée.

Enfin, il est indiqué que les alimentations haute pression 58 et 66 ainsi que les orifices de fuite 61 et 68 auraient également pu être agencés au niveau de l'une des deux chambres 38 des vérins latéraux 30, sans sortir du cadre de l'invention.

Bien entendu, diverses modifications peuvent être apportées par l'homme du métier aux systèmes de montage 1 et 100 et au mât d'accrochage 6 qui viennent d'être décrits, uniquement à titre d'exemples non limitatifs.

**Revendications**

1. Ensemble moteur pour aéronef comprenant un moteur (2), un mât d'accrochage (6) du moteur (2) fixé sous une voilure (8) de l'aéronef, ledit mât d'accrochage (6) comprenant un système de montage (1,100) interposé entre un moteur (2) d'aéronef et une structure rigide (4) d'un mât d'accrochage (6) fixé sous une voilure (8) de cet aéronef, le système comprenant une attache avant (16), une attache arrière (18), ainsi qu'un dispositif (20) de reprise des efforts de poussée générés par le moteur (2), **caractérisé en ce que** :

   ledit dispositif (20) comprend deux vérins latéraux (30) disposés de part et d'autre du moteur (2), chaque vérin (30) disposant d'une tige (34) dont une extrémité arrière (34a) est raccordée à l'une desdites attache avant (16) et attache arrière (18) et dont une extrémité avant (34b) est un piston situé à l'intérieur d'une chambre (38) solidaire d'une partie avant d'un carter central (22) du moteur (2), ladite chambre (38) comportant un compartiment avant (40) et un compartiment arrière (42) séparés par ledit piston (34b) ;
   et **en ce que** ledit dispositif de reprise (20) comporte en outre un dispositif à piston hydraulique (32,132) comportant un piston (48) solidaire de l'attache avant (16) et situé à l'intérieur d'une chambre (50) solidaire de ladite partie avant du carter central (22) du moteur (2), ladite chambre (50) comportant un compartiment avant (52) et un compartiment arrière (54) séparés par ledit piston (48), ledit compartiment avant (52) de ladite chambre (50) du dispositif à piston hydraulique (32,132) étant connecté hydrauliquement auxdits compartiments arrière (42) des vérins latéraux (30).

2. Ensemble selon la revendication 1, **caractérisé en ce que** ledit compartiment arrière (54) de ladite chambre (50) du dispositif à piston hydraulique (32,132) est connecté hydrauliquement auxdits compartiments avant (40) des vérins latéraux (30).

3. Ensemble selon la revendication 1 ou la revendication 2, **caractérisé en ce que** lesdits compartiments avant (40) des deux vérins latéraux (30) sont connectés hydrauliquement, et **en ce que** lesdits compartiments arrière (42) des ces deux vérins latéraux (30) sont également connectés hydrauliquement.

4. Ensemble selon l'une quelconque des revendications précédentes, **caractérisé en ce que** lesdites chambres (38,50) sont pratiquées à l'intérieur de la partie avant du carter central (22) du moteur (2).

5. Ensemble selon l'une quelconque des revendications précédentes, **caractérisé en ce que** l'extrémité arrière (34a) de chacune des deux tiges (34) est connectée à ladite attache avant (16).

6. Ensemble selon l'une quelconque des revendications précédentes, **caractérisé en ce que** ledit système comporte une attache avant (16) solidaire de la partie avant du carter central (22) du moteur (2), et **en ce que** ledit système comporte également une attache arrière (18) solidaire d'une partie arrière du carter central (22) du moteur (2) et de la structure rigide (4) du mât (6).

7. Ensemble selon la revendication 6, **caractérisé en ce que** l'attache avant (16) comporte une rotule (19) montée sur un axe (56) orienté selon une direction longitudinale (X) de l'aéronef, et **en ce que** le piston (48) du dispositif à piston hydraulique (32,132) est solidaire de cet axe (56), et agencé sensiblement perpendiculairement à cette direction longitudinale (X).

8. Ensemble selon l'une quelconque des revendications précédentes, **caractérisé en ce que** le compartiment avant (52) de la chambre (50) du dispositif à piston hydraulique (32) est connecté hydrauliquement uniquement aux compartiments arrière (42) des vérins latéraux (30).

9. Ensemble selon l'une quelconque des revendications 1 à 7, **caractérisé en ce que** ledit compartiment avant (52) du dispositif à piston hydraulique (132) est également connecté hydrauliquement à une alimentation hydraulique haute pression (58) et dispose d'au moins un orifice de fuite (61) dont l'accès est apte à être autorisé/interdit par un organe (62) solidaire dudit piston (48), en fonction de la pression hydraulique régnant à l'intérieur du compartiment avant (52), ainsi qu'en fonction des efforts de poussée générés par le moteur (2).

10. Ensemble selon la revendication 9, **caractérisé en ce que** ledit compartiment arrière (54) du dispositif à piston hydraulique (132) est également connecté hydrauliquement à une alimentation hydraulique haute pression (66) et dispose d'au moins un orifice de fuite (68) dont l'accès est apte à être autorisé/interdit par un organe (70) solidaire dudit piston (48), en fonction de la pression hydraulique régnant à l'intérieur du compartiment arrière (54), ainsi qu'en fonction des efforts de contre-poussée générés par le moteur (2).

**Claims**

1. Aircraft engine assembly including an engine (2), an attachment strut (6) for engine (2) fixed under a wing (8) of the aircraft, said mounting system (1, 100) inserted between an aircraft engine (2) and a rigid structure (4) of an attachment strut (6) fixed under a wing (8) of this aircraft, the system including a forward mount (16), an aft mount (18), and a device (20) for resisting thrusts generated by the engine (2), **characterized in that**:

   said device (20) comprises two lateral actuators (30) arranged one on each side of the engine (2), each actuator (30) being provided with a rod (34) in which an aft end (34a) is connected to one of said forward (16) and aft (18) mounts and for which one forward end (34b) is a piston located inside a chamber (38) fixed to a forward part of a central casing (22) of the engine (2), said chamber (38) comprising a forward compartment (40) and an aft compartment (42) separated by said piston (34b);
   and **in that** said thrust resistance device (20) also comprises a hydraulic piston device (32, 132) comprising a piston (48) fixed to the forward mount (16) and located inside a chamber (50) fixed to said forward part of the central casing (22) of the engine (2), said chamber (50) comprising a forward compartment (520 and an aft compartment (54) separated by said piston (48), said forward compartment (52) of said chamber (50) of the hydraulic piston device (32, 132) being hydraulically connected to said aft compartments (42) of the lateral actuators (30).

2. Assembly according to claim 1, **characterized in that** said aft compartment (54) of said chamber (50) of the hydraulic piston device (32, 132) is hydraulically connected to said forward compartments (40) of the lateral actuators (30).

3. Assembly according to claim 1 or 2, **characterized in that** said forward compartments (40) of the two lateral actuators (30) are hydraulically connected, and **in that** said aft compartments (42) of these two lateral actuators (30) are also hydraulically connected.

4. Assembly according to any one of the above claims, **characterized in that** said chambers (38, 50) are formed inside the forward part of the central casing (22) of the engine (2).

5. Assembly according to any one of the above claims, **characterized in that** the aft end (34a) of each of the two rods (34) is connected to said forward mount (16).

6. Assembly according to any one of the above claims, **characterized in that** said system comprises a forward mount (16) fixed to the forward part of the central casing (22) of the engine (2), and **in that** said system also comprises an aft mount (18) fixed to one aft part of the central casing (22) of the engine (2) and to the rigid structure (4) of the strut (6).

7. Assembly according to claim 6, **characterized in that** the forward mount (16) comprises a ball joint (19) mounted on a hinge pin (56) oriented along a longitudinal direction (X) of the aircraft, and **in that** the piston (48) of the hydraulic piston device (32, 132) is fixed to this hinge pin (56), and arranged to be approximately perpendicular to this longitudinal direction (X).

8. Assembly according to any one of the above claims, **characterized in that** the forward compartment (52) of the chamber (50) of the hydraulic piston device (32) is hydraulically connected only to the aft compartments (42) of the lateral actuators (30).

9. Assembly according to any one of claims 1 to 7, **characterized in that** said forward compartment (52) of the hydraulic piston device (132) is also hydraulically connected to a high pressure hydraulic supply (58) and is provided with at least one leak orifice (61) for which access can be enabled/disabled by a device (62) fixed to said piston (48), as a function of the hydraulic pressure inside the forward compartment (52), and as a function of thrust forces generated by the engine (2).

10. Assembly according to claim 9, **characterized in that** said aft compartment (54) of the hydraulic piston device (132) is also hydraulically connected to a high pressure hydraulic supply (66) and is provided with at least one leak orifice (68) for which access can be enabled/disabled by a device (70) fixed to said piston (48), as a function of the hydraulic pressure inside the aft compartment (54), and as a function of the reverse thrusts generated by the engine (2).

**Patentansprüche**

1. Triebwerkeinheit für ein Luftfahrzeug mit einem Triebwerk (2), einem Aufhängungsmast (6) des Triebwerks (2), der unter einem Tragwerk (8) des Luftfahrzeugs befestigt ist, wobei der Aufhängungsmast (6) ein Montagesystem (1,100) umfaßt, das zwischen ein Luftfahrzeug-Triebwerk (2) und eine starre Struktur (4) eines unter dem Tragwerk (8) dieses Luftfahrzeugs befestigten Aufhängungsmasts (6) eingefügt ist, wobei das System eine vordere Befestigung (16), eine hintere Befestigung (18) sowie eine Vorrichtung (20) zur Aufnahme von durch den Motor (2) erzeugten Schubkräften umfaßt, **dadurch gekennzeichnet, dass**:

   die Vorrichtung (20) zwei laterale Zylinder (30) umfaßt, die beidseitig des Triebwerks (2) angeordnet sind, wobei jeder Zylinder (30) eine Stange (34) aufweist, von der ein hinteres Ende (34a) mit einer der Befestigungen, der vorderen (16) oder der hinteren (18) verbunden ist, und von dem ein vorderes Ende (34b) ein Kolben ist, der sich im Inneren einer mit einem vorderen Abschnitt eines zentralen Gehäuses (22) des Triebwerks (2) einstückigen Kammer (38) befindet, wobei die Kammer (38) ein vorderes Fach (40) und ein hinteres Fach (42) umfaßt, die durch den Kolben (34b) unterteilt sind,
   und **dass** die Kraftaufnahmevorrichtung (20) außerdem eine Hydraulikkolben-Vorrichtung (32,132) umfaßt, die einen mit der vorderen Befestigung (16) einstückigen bzw. fest verbundenen und einem Inneren einer mit dem vorderen Teil des zentralen Gehäuses (22) des Triebwerks (2) einstückigen Kammer (50) befindlichen Kolben (48) aufweist, wobei die Kammer (50) ein vorderes Fach (52) und ein hinteres Fach (54) umfaßt, die durch den Kolben (48) unterteilt sind, und das vordere Fach (52) der Kammer (50) der Hydraulikkolben-Vorrichtung (32,132) hydraulisch mit den hinteren Fächern (42) der lateralen Zylinder (30) verbunden ist.

2. Einheit nach Anspruch 1, **dadurch gekennzeichnet, dass** das hintere Fach (54) der Kammer (50) der Hydraulikkolben-vorrichtung (32,132) mit den vorderen Fächern (40) der lateralen Zylinder (30) hydraulisch verbunden ist.

3. Einheit nach Anspruch 1 oder 2, **dadurch gekennzeichnet, dass** die vorderen Fächer (40) der beiden lateralen Zylinder (30) hydraulisch miteinander verbunden sind, und dass die hinteren Fächer (42) dieser beiden lateralen Zylinder (30) ebenfalls hydraulisch miteinander verbunden sind.

4. Einheit nach einem der vorangehenden Ansprüche, **dadurch gekennzeichnet, dass** die Kammern (38,50) ins Innere des vorderen Abschnitts des zentralen Gehäuses (22) des Triebwerks (2) eingearbeitet sind.

5. Einheit nach einem der vorangehenden Ansprüche, **dadurch gekennzeichnet, dass** das hintere Ende (34a) jeder der beiden Stangen (34) mit der vorderen Befestigung (16) verbunden ist.

6. Einheit nach einem der vorangehenden Ansprüche, **dadurch gekennzeichnet, dass** das System eine mit dem vorderen Abschnitt des zentralen Gehäuses (22) des Triebwerks (2) einstückige bzw. fest verbundene vordere Befestigung (16) umfaßt, und dass das System auch eine mit einem hinteren Abschnitt des zentralen Gehäuses (22) des Triebwerks (2) und der starren Struktur (4) des Masts (6) einstückige bzw. fest verbundene hintere Befestigung (18) umfaßt.

7. Einheit nach Anspruch 6, **dadurch gekennzeichnet, dass** die vordere Befestigung (16) ein Kugelgelenk (19) umfaßt, das auf einer in der Longitudinalrichtung (X) des Luftfahrzeugs ausgerichteten Achse (56) angebracht ist, und dass der Kolben (48) der Hydraulikkolben-Vorrichtung (32,132) mit dieser Achse (56) einstückig bzw. fest verbunden ist und im wesentlichen senkrecht zu dieser Longitudinalrichtung (X) angeordnet ist.

8. Einheit nach einem der vorangehenden Ansprüche, **dadurch gekennzeichnet, dass** das vordere Fach (52) der Kammer (50) der Hydraulikkolben-Vorrichtung (32) lediglich mit den hinteren Fächern (42) der lateralen Zylinder (30) hydraulisch verbunden ist.

9. Einheit nach einem der vorangehenden Ansprüche 1 bis 7, **dadurch gekennzeichnet, dass** das vordere Fach (52) der Hydraulikkolben-Vorrichtung (132) auch mit einer hydraulischen Hochdruckzuführleitung (58) hydraulisch verbunden ist und über mindestens eine Abzugsöffnung (61) verfügt, deren Zugang von einem mit dem Kolben (48) einstückigen Element (62) zugelassen/unterbunden werden kann, und zwar in Abhängigkeit von dem im Inneren des vorderen Fachs (52) herrschenden hydraulischen Druck sowie in Abhängigkeit von den durch das Triebwerk (2) erzeugten Schubkräften.

10. Einheit nach Anspruch 9, **dadurch gekennzeichnet, dass** das hintere Fach (54) der Hydraulikkolben-Vorrichtung (132) auch mit einer hydraulischen Hochdruckzuführleitung (66) hydraulisch verbunden ist und über mindestens eine Abzugsöffnung (68) verfügt, deren Zugang durch ein mit dem Kolben (48) einstückiges Element (70) zugelassen/unterbunden werden kann, und zwar in Abhängigkeit von dem im Inneren des hinteren Fachs (54) herrschenden hydraulischen Druck sowie in Abhängigkeit von den durch das Triebwerk (2) erzeugten Gegen-Schubkräften.

Fig. 1

Fig. 2

Fig. 3

Fig. 4

**Fig. 5**

EP 1 571 080 B1